Europäisches Patentamt

European Patent Office

Office européen des brevets

(19)

(11)    EP 1 602 948 A1

(12)    **EUROPEAN PATENT APPLICATION**
published in accordance with Art. 158(3) EPC

(43) Date of publication:
   **07.12.2005   Bulletin 2005/49**

(51) Int Cl.⁷: **G02B 5/30**, G02F 1/1335,
   B41F 17/14, B41F 3/20

(21) Application number: **04716031.2**

(22) Date of filing: **01.03.2004**

(86) International application number:
   **PCT/JP2004/002460**

(87) International publication number:
   **WO 2004/079413 (16.09.2004 Gazette 2004/38)**

(84) Designated Contracting States:
   **AT BE BG CH CY CZ DE DK EE ES FI FR GB GR
   HU IE IT LI LU MC NL PL PT RO SE SI SK TR**
   Designated Extension States:
   **AL LT LV MK**

(30) Priority:  **04.03.2003  JP 2003057376
           30.04.2003  JP 2003124894
           01.05.2003  JP 2003126262
           07.05.2003  JP 2003128688
           19.05.2003  JP 2003140025**

(71) Applicant: **Nakan Corporation
   Chiba-shi, Chiba 262-0012 (JP)**

(72) Inventors:
   • **ISHIBASHI, Yoshihide, Nakan Corporation
     Chiba-shi, Chiba 262-0012 (JP)**

   • **SUNG, Powei, Nakan Corporation
     chiba-shi, Chiba 2620012 (JP)**
   • **OHMURA, Shinya, Nakan Corporation
     chiba-shi, Chiba 2620012 (JP)**
   • **AZUMA, Chikako, Nakan Corporation
     chiba-shi, Chiba 2620012 (JP)**
   • **BAE, Honggi, Nakan Corporation
     chiba-shi, Chiba 2620012 (JP)**
   • **SASAKI, Hiroshi, Nakan Corporation
     chiba-shi, Chiba 2620012 (JP)**
   • **NAKANISHI, Shoji, Nakan Corporation
     chiba-shi, Chiba 2620012 (JP)**

(74) Representative: **Newstead, Michael John et al
   Page Hargrave
   Southgate
   Whitefriars
   Lewins Mead
   Bristol BS1 2NT (GB)**

(54)    **POLARIZING FILM PRODUCING DEVICE**

(57)    Printing unevenness caused in forming a polarizing film by printing an ink liquid of dichromatic dye is minimized to provide satisfactory LCD display characteristics. Bearings (8, 8) are erected on opposite sides of a table (5) and are formed with vertical slots (9, 9), into which the opposite ends of an axle (10) of a printing cylinder (2) are dropped, whereby the axle (10) of the printing cylinder (2) are loosely fitted in the right and left bearings (8, 8). The bearings (8, 8) are horizontally movably constructed and connected to a horizontal motion drive (not shown). Further, right and left weights (11, 11) of equal heaviness are attached to the opposite sides of the axle (10) of the printing cylinder (2). In producing a polarizing film, a substrate (6) is placed on the table (5) and a format (1) having a number of fine grooves (a) is attached to the printing cylinder (2) and placed on the substrate (6). And the ink liquid of dichromatic dye is applied to the format (1) to form a thin film of ink liquid on the format surface, and the bearings (8, 8) are horizontally moved along the printing direction. Thereby, the printing cylinder (2) rolls on the substrate (6), so that the thin film of ink liquid is transferred from the format (1) to the substrate (6).

Fig. 2

**Description**

Technical Field:

The present invention relates to an apparatus for making liquid crystal displays, and particularly to a polarizing film producing apparatus using the method of applying a dichromatic dye to a substrate to provide a polarizing film on its surface.

Background Art:

Usually, two deflecting plates are bonded to the opposite sides of a liquid crystal cell, which has passed a panel test.

Specifically, two deflecting plates need to be bonded to each and every liquid crystal cell that has been cut and separated by using a scriber, which thus requires a lot of time and labor.

Also, the bonding work inconveniently requires various measures such as; strict precision in alignment, sufficient adherence strength, exclusion of bubbles and dust particles, and prevention of static electricity. At the later stage of production, semi-finished products are subjected to an autoclave treatment to strengthen the bonding between each deflecting plate and the liquid crystal cell, and to expel bubbles if any from a gap between each deflecting plate and the liquid crystal cell. Such assembling work is laborious and time-consuming.

As a remedy to this problem, the present applicant has developed a method for producing a deflecting plate by using an ink produced by Optiva, Inc. of the USA, which comprises of supramolecular complex in liquid crystalline state of dichromatic dye automatically accumulated in a stick-like form, and has applied for a patent (Japanese Patent Application No.2002-214206). In this method, said ink is applied to a glass or plastic substrate by an ordinary flexographic printing machine to produce a deflecting plate, thereby eliminating the bonding work in assembling liquid crystal cells, and substantially improving the production eficiency of LCDs.

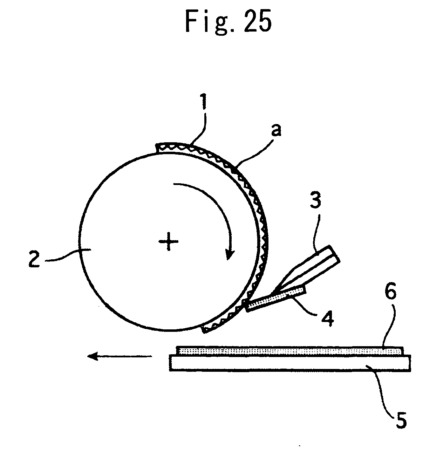

Fig.25 illustrates an apparatus for making deflecting plates according to the technique just described.

In the drawing, a printing cylinder 2 has a format 1 stuck to its circumference, and the format 1 has numbers of fine grooves "a" made there-across. The rotating format 1 is fed with droplets of ink liquid from a lateral dispenser 3, and the ink liquid is made to spread by a blade 4 so that molecular liquid crystal of dichromatic dye is pushed into the fine grooves "a".

The blade 4 is held not in contact with the format 1, just leaving a narrow gap between the blade 4 and the format 1 to form an ink film on the format 1.

When a substrate 6 fixed on a table 5 passes through just below the printing cylinder 2, the format 1 contacts the substrate 6 and so the ink film is transferred from the format 1 to the substrate 6.

Shearing force is applied to the so transferred molecular liquid crystal of the dichromatic dye so that they may be oriented in one direction, regularly aligning molecular dye particles (crystallization) to provide the regular alignment with deflecting function.

When applying the ink liquid, the feeding of the table 5 must be controlled finely. If not, or if a slight slip is caused between the format 1 and the substrate 6, the finished printing will be irregular in an ink-smearing direction. Otherwise, any bow, waviness or unevenness of the glass substrate causes the printing to be irregular in a thickness direction.

As is well known, the deflecting plate takes the important role of visualizing the varying orientation of liquid crystal, and therefore, the deflecting plate has the critical effect on the LCD display's behavior.

Therefore, the irregularity of printing causes defects in exterior appearances and eventually lowers the LCD display's behavior.

The above described apparatus is equipped with complicated precision mechanisms such as a rack-and-gear control to synchronize the movement of the table 5 with the rotation of the printing cylinder 2, a controller for the gap between the blade 4 and the format 1, and a table-feeding controller mechanism.

Therefore, it is costly to produce a very thin polarizing film with desired polarizing function using this apparatus.

On the other hand, the supramolecular complex contained in the ink liquid as described above may be oriented under the influence of shearing force, which is generated when the ink liquid is made to spread by the blade.

Therefore, the supramolecular complex is aligned in the ink-smearing direction under the influence of shearing force and the dye molecules of the liquid crystal are regularly arranged even by simply spreading the ink liquid over the substrate directly with a roller or the format 1 attached to the printing cylinder 2.

Apparently, this requires no complicated precision mechanisms, still facilitating production of polarizing films of desired performance.

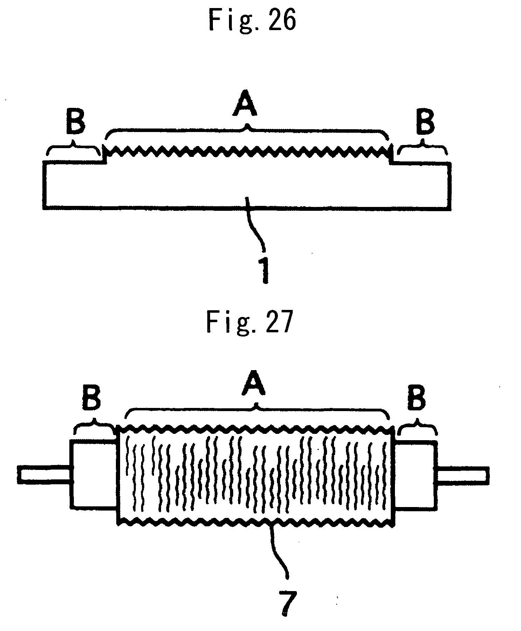

As seen from Fig.26, however, the conventional format 1 has a high relief sticking out a relatively long way, leaving low relieves on its opposite sides; a center printing area A is raised above opposite non-printing areas B.

As for the conventional roller 7 (see Fig.27), its diameter is larger in the center printing area A than in either non-printing area B.

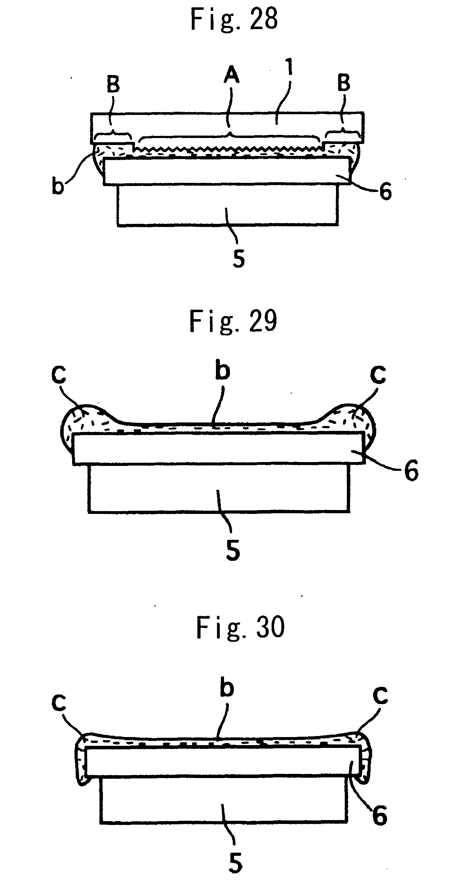

When the conventional format 1 or the roller 7 is used in applying the ink liquid "b" to the whole surface of the substrate 6 to attain a required patterning, the format 1 or the roller 7 presses the ink liquid "b", allowing it to flow beyond the printing area "A" (see Fig.28). As a result, the overspreading ink remains on the opposite sides of the substrate 6, forming ink traps or fountains "c" there in the state of stripe-like extensions (see Fig.29).

The ink liquid is apt to flow toward the center area, and at the same time flow down beyond the opposite edges of the substrate 6 from the ink fountains "c" (see Fig.30).

The ink liquid "b" trapped on the opposite side surfaces dries and turns into particles at the later stage of production, thereby arising the problem of staining the substrate.

Also, this overspreading of the ink liquid "b" is one of the reasons for making the polarizing film irregular in depth in its center area.

It should be noticed that a desired polarizing direction may vary depending on an application and to meet such demands, molecular dye particles of the liquid crystal need to be obliquely oriented on the substrate 6.

The ink-smearing direction cannot be changed, and therefore the table 5 is rotated to form a desired angle between the ink-smearing direction and the center axis of the substrate 6.

Assuming that the table 5 is rotated to a desired angular position, and that the ink liquid is made to spread with the roller or the format, the feeding quantities of the ink liquid would have to be controlled not to flow over the oblique substrate 6, because the required amount of the ink liquid varies with varying lateral dimensions of the oblique substrate 6. The conventional lateral-slit-forming dispenser 3 cannot attain such complicated ink-feeding control.

Disclosure of Invention:

What is aimed at by the first invention of the present inventions is to solve the problems of the uneven printing in the ink-smearing direction caused by the difficulty or impossibility in fine table-feeding control as well as the uneven printing in the thickness direction caused by the printing-surface slippage or by the bow or surface-waviness of the glass substrate. The object of the first invention is therefore to provide a polarizing film producing apparatus which can minimize the uneven printing in applying an ink liquid of dichromatic dye to a substrate, thus providing an LCD of improved display performance.

What is aimed at by the second and third inventions is to eliminate the necessity of equipping the apparatus with complicated precision mechanisms such as a rack-and-gear control to synchronize the table with the printing cylinder, a blade-to-format gap control or a table-feeding mechanism. The object of the second and third inventions is to provide a polarizing film producing apparatus which can produce a polarizing film of desired polarizing performance in a simpler method that does not require any complicated precision mechanisms.

What is aimed at by the fourth invention is to solve the problem of leaving an extra amount of ink liquid at the opposite sides of non-printing areas as a result of the ink liquid overflowing under the influence of the conventional pressing format and roller, thus forming the strip-like extensions of ink traps at the opposite sides of the substrate. The object of the fourth invention is to provide a polarizing film producing apparatus which is guaranteed to be free of any ink-traps at the opposite sides of the substrate.

What is aimed at by the fifth invention is to reduce the difficulty in controlling the ink-feeding quantities to prevent the so fed ink from flowing over the substrate when the roller or the format spreads the ink liquid on the obliquely placed substrate: the necessary ink amount changes in width direction with varying lateral dimension of the oblique substrate, and the conventional apparatus using a lateral slit-forming dispenser can hardly meet the required fme-control of ink-feeding amount. The object of the fifth invention is to provide a polarizing film producing apparatus which enables the fine-adjustment of ink-feeding amount to prevent the overflowing of ink liquid beyond the oblique substrate.

To attain its aim, the first invention is an improvement in or relating to a polarizing film producing apparatus in which a dichromatic dye ink liquid is applied to a format fixed to a printing cylinder to form an ink film on the format, and the so formed ink film is transferred from the format to a substrate to produce a polarizing film, characterized in that: the opposite ends of an axle of the printing cylinder are freely supported in a pair of horizontally movable bearings; the printing cylinder is laid on the substrate; and the bearings are then horizontally moved in a printing direction; thereby allowing the printing cylinder to rotate on the substrate while transferring the ink film to the substrate.

The second invention is a polarizing film producing apparatus in which a polarizing film is produced by applying onto the surface of the substrate an ink liquid containing supramolecular complex in liquid crystalline state of dichromatic dye automatically accumulated in a stick-like form, characterized in that: a roller having a plurality of fine grooves formed on its circumference is freely supported by a pair of movable bearings and is kept in contact with the substrate; and the movable bearings are horizontally moved along the substrate; thereby allowing the roller to rotate and spread said ink liquid over the substrate.

The third invention is a polarizing film producing apparatus using an aqueous solution containing automatically accumulated stick-like supramolecular complex in lyotropic liquid crystalline state as an ink liquid, characterized in that it includes spacers placed between a doctor and a substrate while applying the ink liquid over the substrate.

The fourth invention is a polarizing film producing apparatus in which a polarizing film is produced on the surface of a substrate using a printing format member put on the substrate to apply an ink liquid containing supramolecular complex in liquid crystalline state of dichromatic dye automatically accumulated in a stick-like form, characterized in that said printing format member has a printing surface leveled off throughout a whole contacting area with the substrate.

The fifth invention is a polarizing film producing apparatus in which a polarizing film is produced on the surface of a substrate using a doctor to apply an ink liquid containing supramolecular complex in liquid crystalline state of dichromatic dye automatically accumulated in a stick-like form, characterized in that: an injection needle-like dispenser is placed at a selected end on the substrate; the injection needle-like dispense is moved perpendicular to ink-smearing direction to drop the ink liquid forming a linear puddle; and then a doctor is moved in the ink-smearing direction to make the linear puddle of the ink liquid spread in two-dimensional way.

Brief Description of Drawings

Fig.1 is a schematic view of a polarizing film producing apparatus according to one embodiment of the first invention;
Fig.2 shows how a polarizing film is made by the polarizing film producing apparatus according to the first invention;
Fig.3 shows some examples of fine grooves;
Fig.4 is a schematic view of a polarizing film producing apparatus according to one embodiment of the second invention;
Fig. 5 shows how a polarizing film is made by the polarizing film producing apparatus according to the second invention;
Fig. 6 is a schematic view of a polarizing film producing apparatus having a multi-film sectioned substrate;
Fig.7 is a conceptual diagram of a polarizing film producing apparatus according to one embodiment of the third invention, using a cylindrical doctor;
Fig.8 is a conceptual diagram of a polarizing film producing apparatus according to another embodiment of the third invention, using a prismatic doctor;
Fig. 9 shows how a polarizing film is made by the polarizing film producing apparatus according to the embodiment of the third invention, using the cylindrical doctor;
Fig. 10 shows how a polarizing film is made by the polarizing film producing apparatus according to another embodiment of the third invention, using the prismatic doctor;
Fig. 11 is a conceptual diagram of a polarizing film producing apparatus using a cylindrical doctor applied to a multi-film sectioned substrate;
Fig. 12 is a conceptual diagram of a polarizing film producing apparatus using a prismatic doctor applied to a multi-film sectioned substrate;
Fig. 13 illustrates how a substrate is oriented obliquely relative to an ink-smearing direction;
Fig. 14 is a schematic view of a polarizing film producing apparatus according to one embodiment of the fourth invention;
Fig. 15 shows how a polarizing film is made by the polarizing film producing apparatus according to the fourth invention;
Fig. 16 shows how a format is applied to a substrate in the polarizing film producing apparatus according to the fourth invention;
Fig.17 shows how an ink liquid spreads when applied to the substrate by the format in the polarizing film producing apparatus according to the fourth invention;
Fig.18 shows a format having its printing area extending all over the surface;
Fig. 19 shows a roller used in the polarizing film producing apparatus according to the fourth invention;
Fig.20 is a schematic view of a polarizing film producing apparatus according to one embodiment of the fifth invention, using a cylindrical doctor;
Fig.21 is a schematic view of a polarizing film producing apparatus according to another embodiment of the fifth invention, using a prismatic doctor;
Fig.22 shows how the ink liquid is applied to the substrate, which is put in the same direction as the ink-smearing direction;
Fig.23 shows how the ink liquid is applied to the substrate, which is put obliquely relative to the ink-smearing direction;
Fig.24 shows how the longitudinal distances vary from two adjacent orthogonally crossing sides to the two counter sides of the substrate;

Fig.25 generally illustrates a conventional apparatus for making polarizing films;

Fig.26 shows a conventional format;

Fig.27 shows a conventional roller;

Fig.28 shows how an ink liquid film is transferred from the conventional format to the substrate;

Fig.29 shows how the ink liquid spreads on the substrate just after being applied with the conventional format; and

Fig.30 shows the state of the ink liquid when a certain length of time has passed since being applied with the conventional format.

Best Mode for Carrying Out the Invention:

Now some embodiments of the present inventions are described below:

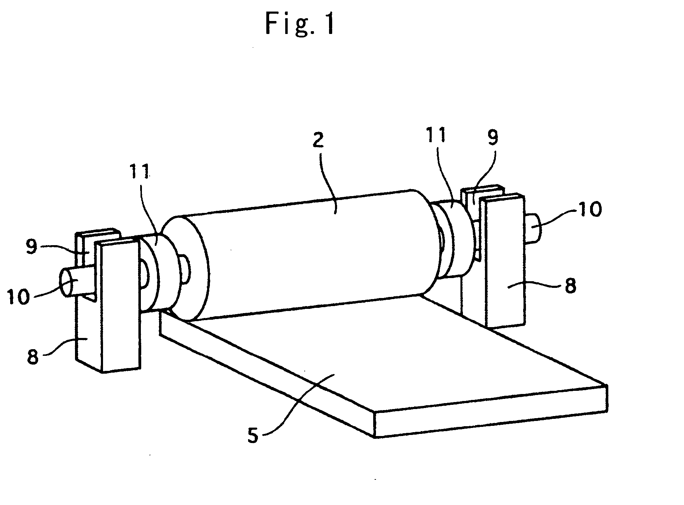

Fig.1 generally shows a polarizing film producing apparatus according to one embodiment of the first invention. As seen from the drawing, a table 5 has a pair of bearings 8 and 8 rising upright on its opposite sides, each bearing 8 having a vertical slot 9 to accommodate the opposite ends of an axle 10 of a printing cylinder 2, thus allowing the axle 10 of the printing cylinder 2 to freely rotate in the slots 9.

The bearings 8 and 8 are constructed that they are horizontally movable and are connected to a horizontal motion drive (not shown).

The axle 10 of the printing cylinder 2 has equal weights 11, 11 fixed at its opposite sides.

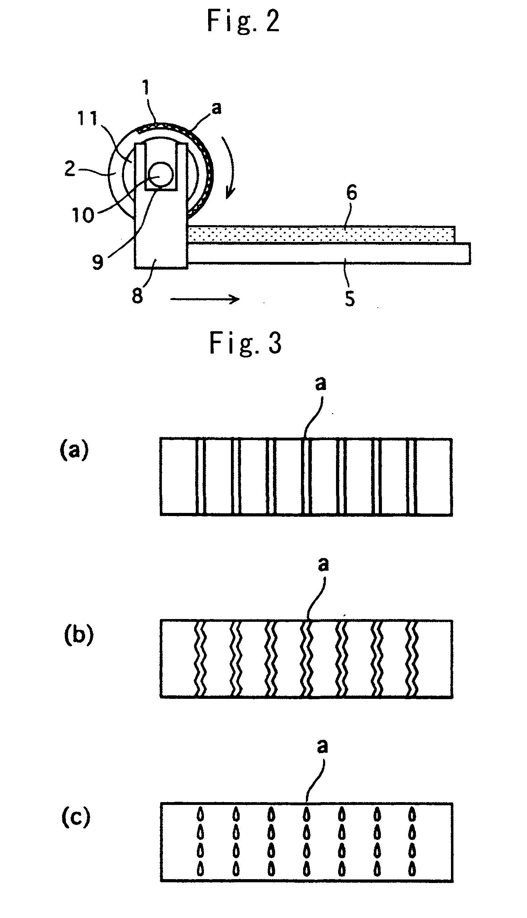

With the above described arrangement, a substrate 6 is laid on the table 5 as shown in Fig.2, and a format 1 having numbers of fine grooves "a" formed on its circumference is stuck to the printing cylinder 2, and closely put on the substrate 6.

Then, the force applied from the printing cylinder 2 to the substrate 6 is controlled by the weights 11 and 11, which are attached to the opposite sides of the axle 10 of the printing cylinder 2.

A dichromatic ink liquid is applied to the format 1 to form an ink film on the format surface, and then the bearings 8 and 8 are horizontally moved in the printing direction.

Thus, the printing cylinder 2 rotates on the substrate 6 to transfer the ink film from the format 1 to the substrate 6.

Then, the stick-like supramolecular complex contained in the ink liquid is subjected to application of shearing force, which appears across a very narrow gap between the fine grooves "a" of the format 1 and the substrate 6, so that the supramolecular complex may align on the substrate 6.

Thus, the ink film transferred to the substrate 6 is provided with polarizing capability.

The film thickness can be controlled by the cross-sectional shape of the format 1 and the weights 11 and 11.

Fig.3 shows some examples of the fine grooves "a".

Specifically, Fig.3(a) shows stripe grooves, which are appropriate for the low-speed transfer.

Fig.3(b) shows wavy grooves, which are appropriate for the high-speed transfer.

Fig.3(c) shows fusiformed or raindrop-like grooves, which are also appropriate for the high-speed transfer.

These fine grooves "a" work together with the underlying substrate 6 to cause the stick-like supramolecular complex in the ink liquid there-between to align in one direction.

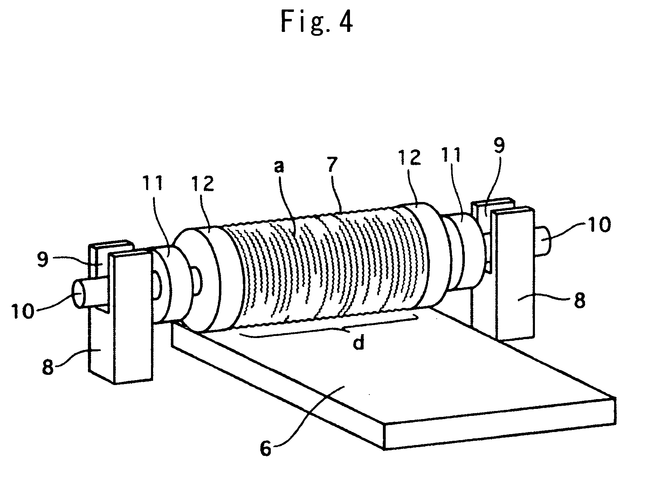

Fig.4 generally illustrates a polarizing film producing apparatus according to one embodiment of the second invention.

A table 6 has a pair of bearings 8 and 8 rising upright on its opposite sides, each bearing 8 having a vertical slot 9 to accommodate the opposite ends of an axle 10 of a roller 7.

Thus, the axle 10 of the roller 7 is movably fitted in the opposite bearings 8 and 8 in such a way that the roller 7 can be easily removed and mounted.

The bearings 8 and 8 are constructed that they are horizontally movable and are connected to a horizontal motion drive (not shown).

The axle 10 of the roller 7 has equal weights 11, 11 fixed at its opposite sides..

The roller 7 has numerous fine grooves "a" formed on its circumference, and is adapted to keep contact with the surface of the substrate 6 while rotating thereon.

The roller 7 also has smooth areas on its opposite ends and two metal foil strips 12 are tightly wound around the smooth areas to define a lateral slit-like gap "d" between the roller 7 and the substrate 6.

A plurality of rollers 7 are prepared and used in turn Every time one roller is used, it is removed from the bearings to be changed for a new one, which is used for the following ink-application work.

The used roller is washed and dried while being removed from the bearings, and prepared for its next turn.

The metal foil strip 12 may be a commercially available "Shim tape" (Registered Trademark), which is made of stainless steel, brass, soft copper, and the like, in 12.7 mm wide, 1000 mm long, and 0.005, 0.01, 0.02, 0.03, 0.04 or 0.05 mm thick. The Shim tape comes in a one meter strip roll, and can be used and disposed by cutting the tape in a desired length.

A metal foil strip thicker than the above specified dimension would define too large a gap between the roller 7 and the substrate 6 to produce a polarizing film

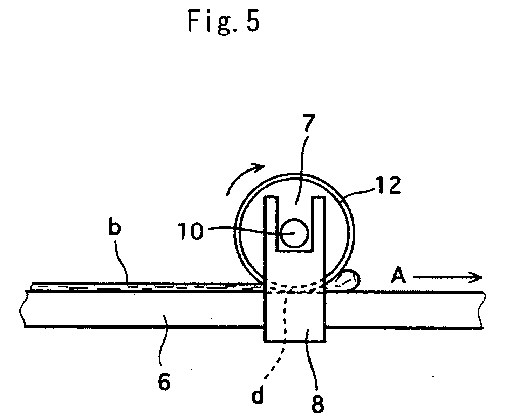

The polarizing film producing apparatus according to the second invention is constructed as described above and works in a following way as illustrated in Fig. 5: a dichromatic dye ink liquid "b" drops from a dispenser (not shown), forming a puddle on the substrate 6 closest to the roller 7, and then, the bearings 8 and 8 are horizontally moved in an ink-smearing direction "A".

Thus, the roller 7 rotates on the substrate 6 to spread the ink liquid "b" until a film of the ink liquid "b" is formed on the surface of the substrate 6.

Then, the fine grooves "a" work together with the underlying substrate 6 to make the stick-like supramolecular complex in the ink liquid "b" in the very narrow gap "d" to align in one direction under the influence of shearing force.

Thus, the film of the ink liquid "b" on the substrate 6 is provided with polarizing capability.

The film thickness can be controlled in terms of the cross-sectional shape of the fine grooves "a" and the thickness of the metal foil 12.

Force appearing between the roller 7 and the substrate 6 can be controlled by the weights 11 and 11 attached to the opposite sides of the roller 7.

Liquid crystal molecules of the dichromatic dye in the ink liquid are influenced by mechanical shearing force for alignment while being made to spread by the roller 7.

Specifically, the spreading of the ink liquid while being constantly exposed to shearing force eventually causes the liquid crystal molecules to align in the printing direction.

Thus, a polarizing film provided with a desired polarizing performance can be obtained without difficulty.

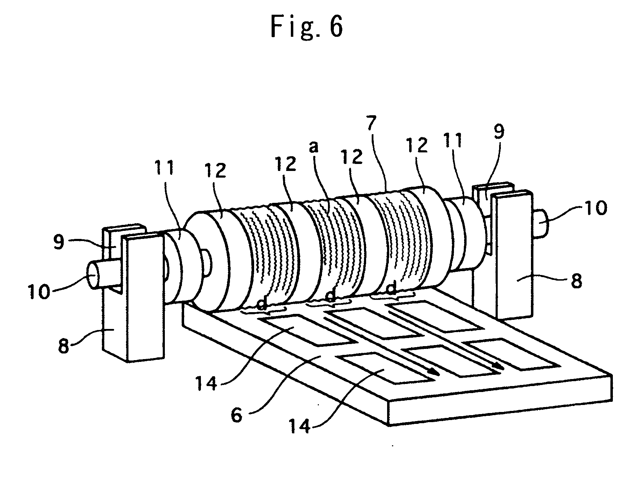

In dealing with a multi-printing sectioned substrate as shown in Fig.6, a roller 7 has fine grooves "a" in grooved sections formed in alignment with panels 14 arranged on the substrate 6, and these grooved sections are separated by smooth sections each wound by a strip of metal foil 12. The roller 7 is put on the substrate 6 with slit-like gaps "d" left between the roller 7 and the panels 14.

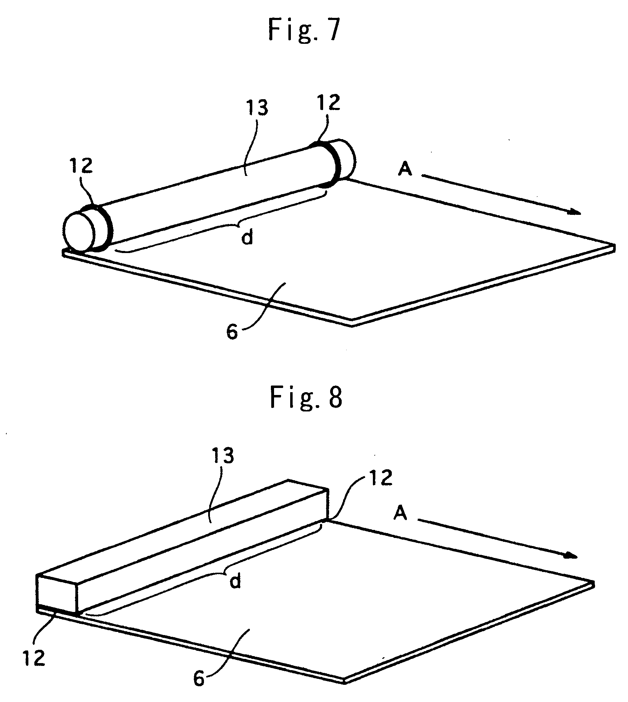

Figs.7 and 8 generally illustrate two apparatuses for making polarizing films according to the third invention.

Referring to Fig.7, a cylindrical doctor 13 has two metal foil strips 12 wound around its opposite ends to define a slit-like gap "d" between the doctor 13 and the substrate 6 when the doctor 13 is put on the substrate 6.

Alternatively, as shown in Fig.8, a prismatic doctor 13 has two metal foil pieces 12 stuck to its opposite bottom ends to define a slit-like gap "d" between the doctor 13 and the substrate 6 when the doctor 13 is put on the substrate 6.

The metal foil strip 12 may be a commercially available "Shim tape" (Registered Trademark), which is made of stainless steel, brass, soft copper, and the like, in 12.7 mm wide, 1000 mm long, and 0.005, 0.01, 0.02, 0.03, 0.04 or 0.05 mm thick. The shim tape comes in a one meter strip roll, and can be used and disposed by cutting the tape in a desired length.

A metal foil strip thicker than the above specified dimension would define too large a gap between the roller 7 and the substrate 6 to produce a polarizing film

A piece of fine wire can be used in place of the metal foil strip.

The doctor 13 can be washed, dried and reused.

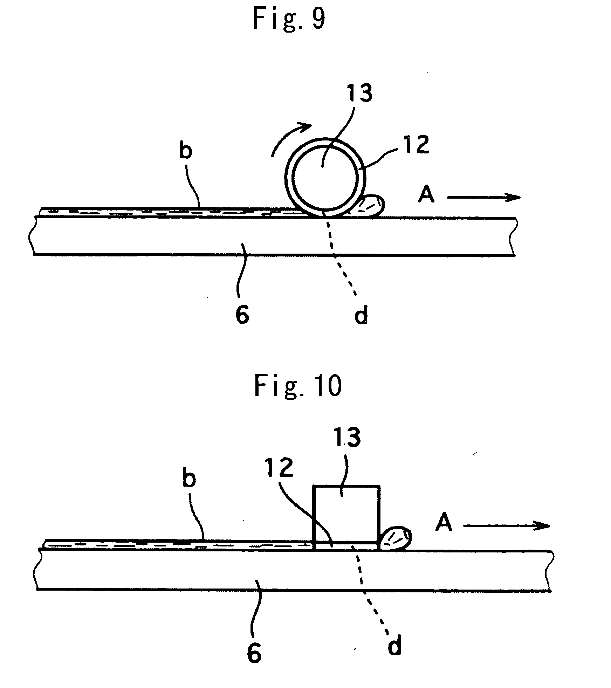

The polarizing film producing apparatus according to the third invention is constructed as described above and works in a following way as illustrated in Figs.9 and 10: a dichromatic dye ink liquid "b" drops from a dispenser (not shown) and form a puddle on the substrate 6 closest to the doctor 13, and then, the doctor 13 is moved in the ink-smearing direction "A". The ink liquid "b" spreads until a film of ink liquid "b" is formed on the surface of the substrate 6.

The gap "d" between the doctor 13 and the substrate 6 defines the thickness of the resulting ink film, and hence, the thickness of the polarizing film.

Sliding movement of the doctor 13 causes shearing force to appear in the direction opposite to the movement of the doctor 13, and the liquid crystal dye molecules align in the direction in which the ink-liquid is applied, under the influence of shearing force. As a result, the ink liquid film is provided with the polarizing capability.

As regards the cylindrical doctor 13, it can slide with or without rotation.

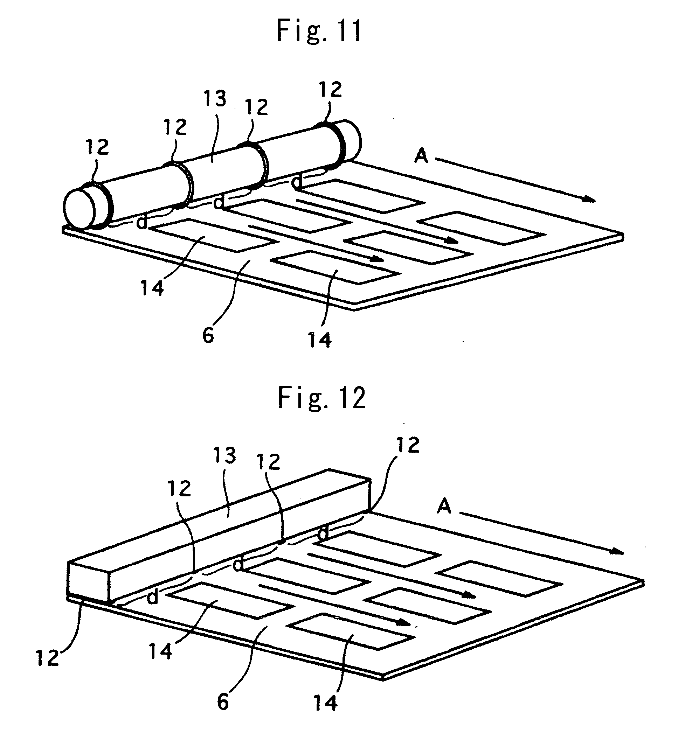

In dealing with a multi-printing substrate having a plurality of panels 14 arranged thereon as shown in Fig.11, a cylindrical doctor 13 having a plurality of metal foil strips 12 wound around the doctor 13 is used to define separate divisional sections in alignment with the panels 14. The doctor 13 is put on the substrate 6 with slit-like gaps "d" left between the doctor 13 and the substrate 6 in such a way that each gap "d" corresponds to individual panels 14 in position.

Alternatively, a prismatic doctor 13 with a plurality of metal foil strips 12 stuck to its bottom to be in alignment with the panels 14 may be used. The doctor 13 is put on the substrate 6 with slit-like gaps "d" left between the doctor 13 and the substrate 6 in such a way that each gap "d" corresponds to individual panels 14 in position.

The substrate 6 may be rubbed in one direction to form a lot of parallel fine grooves on its surface.

Assuming that the interface is not completely even, the applied dye molecules remain in distorted condition.

Specifically, they would remain in the condition in which their elastic distortion energy is minimized.

Consequently, fine grooves interact with dye molecules on the substrate, resulting in alignment of dye molecules in the direction in which fine grooves run.

Even if the rubbing direction is different from the ink-smearing direction, dye molecules align in the rubbing direction irrespective of the ink-smearing direction.

In order to provide a desired polarizing direction that may vary depending on applications, it is required that dye molecules are aligned to be oblique relative to the substrate.

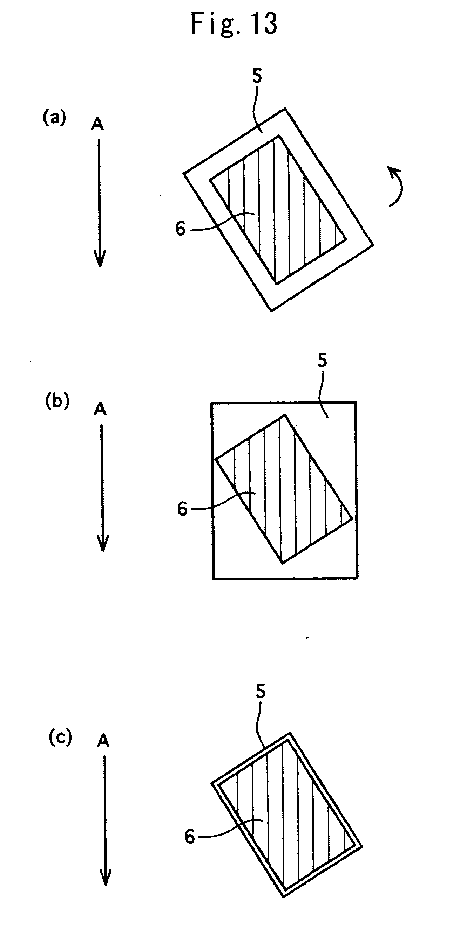

Referring to Fig. 13 (a), it is required that dye molecules of liquid crystal are arranged obliquely relative to a substrate 6. This request cannot be met by changing an ink-smearing direction "A", and so a table 5 needs to be turned until a required oblique angle is formed between the longitudinal center line of the substrate 6 and the ink-smearing direction "A".

However, turning the table 5 may result in inclining of the table 5 with some apparatuses that lacks mechanical precision. Therefore, such apparatuses need to be provided with a measure to increase their mechanical precision, which is costly.

If an apparatus is expensively provided with increased precision, but with a table 5 much larger than a substrate 6 as shown in Fig.13(b), the ink liquid when applied to the substrate 6 with an angle to the ink-smearing direction "A" is liable to flow over the substrate 6, and then the table 5 is stained with ink liquid. The table 5 must be washed and dried every time it is used.

If a table 5 of like size with the substrate 6 is used and both the table 5 and the substrate 6 are placed with an angle to the ink-smearing direction "A" as shown in Fig. 13(c), a necessary amount of ink liquid varies in a lateral direction of the oblique substrate 6, which is perpendicular to the ink-smearing direction "A". It is therefore necessary to provide an apparatus with a complicated measure of controlling an amount of the ink liquid to feed so that the ink liquid does not flow over the substrate 6.

In the apparatus according to the third invention, the ink liquid is applied to the surface-rubbed substrate 6, and then dye molecules of liquid crystal align in the rubbing direction. The rubbing direction can be easily changed as required, making it unnecessary to put the substrate 6 obliquely relative to the ink-smearing direction. With recourse to this, the apparatus according to the third invention can be guaranteed to be free of the above described complications.

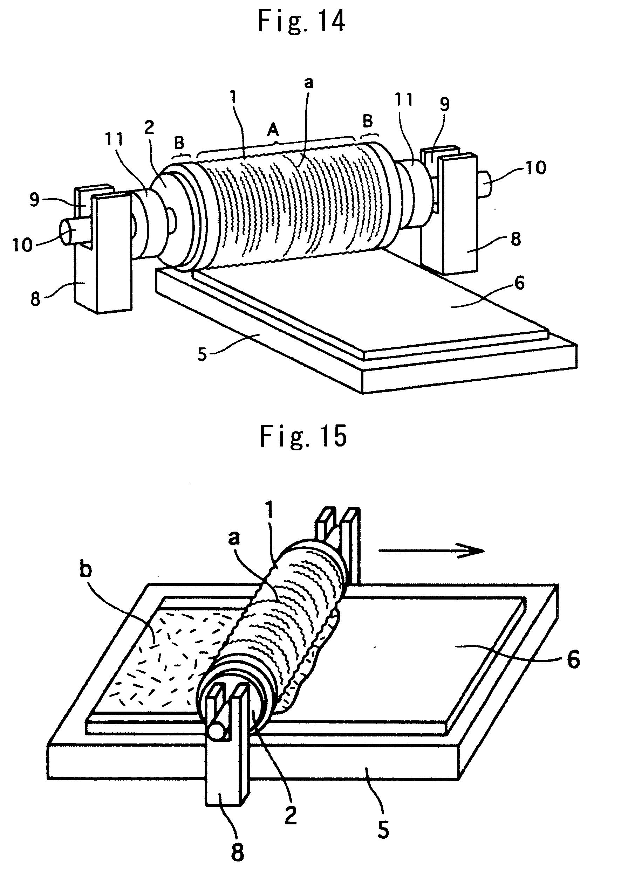

Fig.14 shows a polarizing film producing apparatus according to the fourth invention.

As seen from the drawing, a table 5 has a pair of bearings 8 and 8 rising upright on its opposite longitudinal sides, each bearing 8 having a vertical slot 9 to accommodate the opposite ends of an axle 10 of a printing cylinder 2.

The bearings 8 and 8 are constructed that they are horizontally movable and are connected to a horizontal motion drive (not shown).

A substrate 6 is laid on the table 5, and a format 1 whose width is larger than the substrate 6 is stuck to the printing cylinder 2.

The format 1 is the one for use in flexographic printing machines, and has its center printing section "A" and opposite non-printing sections "B" both at same level without any relief formed. The printing section "A" has numerous fine grooves "a" formed along the printing direction.

The axle 10 of the printing cylinder 2 has equal weights 11, 11 fixed on its opposite sides to control the force appearing between the format 1 and the substrate 6.

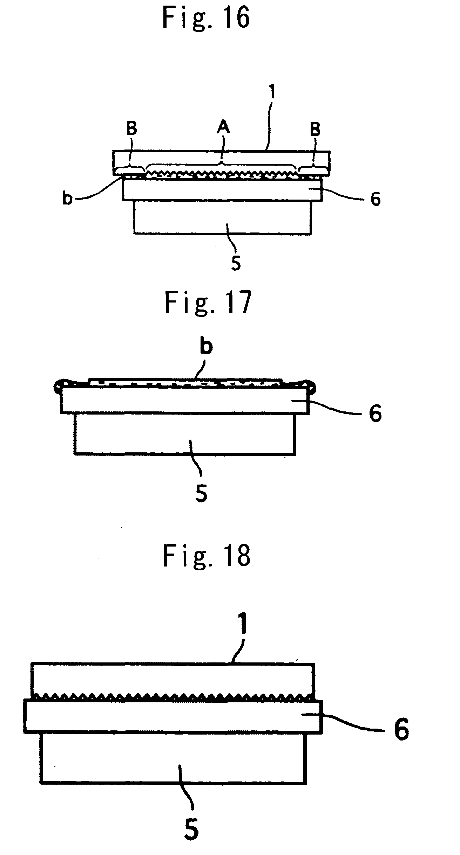

The polarizing film producing apparatus according to the forth invention is constructed as described above and works in a following way as illustrated in Fig. 15: a dichromatic ink liquid "b" drops from a dispenser (not shown) to form an ink puddle closest to the printing cylinder 2, and then, the bearings 8 and 8 are horizontally moved in the printing direction.

Then, the printing cylinder 2 rotates on the substrate 6 to push the ink liquid "b" into the fine grooves "a", and the ink liquid "b" is transferred from the fine grooves "a" to the substrate 6, forming a film of the ink liquid "b" on the surface of the substrate 6.

The ink liquid "b" is confined within the printing section "A" by the non-printing sections "B", which closely contact the substrate 6 to provide barriers (Fig.16). Otherwise, the ink liquid "b" would come out of the printing section "A" under the influence of the pressure from the format 1.

Most of the ink liquid "b" thus flows in the printing direction, but a small amount of the ink liquid still leaks and reaches the opposite longitudinal sides of the substrate 6 (see Fig.17).

This leakage of the ink liquid "b", however, is too small in amount to cause any significant trouble which has to be dealt with later somewhere at the following steps.

The stick-like supramolecular complex in the ink liquid contained in the fine grooves "a" is subjected to shearing force, which appears across a very narrow gap between the fine grooves "a" and the substrate 6. Then, the dye molecules of supramolecular complex align on the substrate 6.

Thus, the film of the ink liquid "b" on the substrate 6 is provided with the polarizing capability.

The format 1 is preferably provided with the non-printing sections "B" for the purposes of increasing workability and protecting the opposite longitudinal sides of the format 1 from damage. In case that a format 1 has its fine-grooved printing section "A" across its full lateral surface, the same effects can be achieved by using a format 1 with its lateral size shorter than the width of the substrate 6 by 1 to 2 mm as described in Fig.18, since the ink liquid "b" can be then effectively prevented from remaining at the opposite longitudinal sides of the substrate 6.

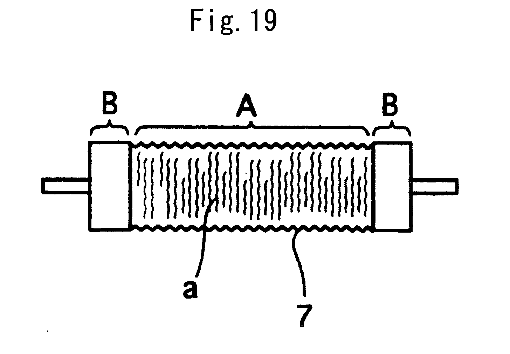

With this embodiment, a roller 7 having numerous fine grooves "a" formed on its circumference may be used in place of the printing cylinder 2 having the format 1 stuck to its circumference as illustrate in Fig.19.

The roller 7 is made of a flexible material such as rubber or synthetic resin, and its printing section "A" is equal in diameter to either non-printing section "B" without forming any relief.

This relief-less shape has an effect of preventing appearance of the ink puddle "c", which would be caused with the conventional roller 7, at either longitudinal side of the substrate 6.

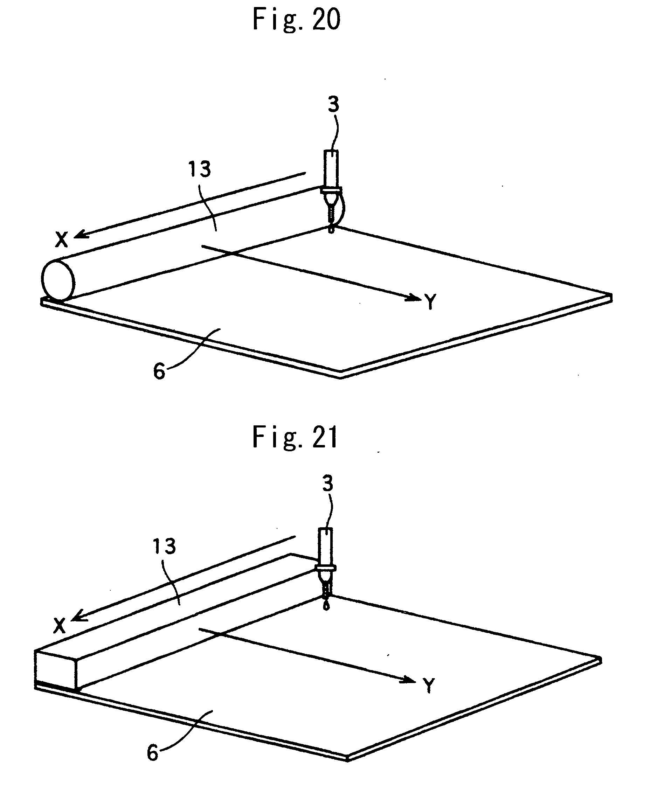

Figs.20 and 21 show a polarizing film producing apparatus according to the fifth invention. As seen from Fig. 20, a cylindrical doctor 13 is put on one lateral side of a substrate 6, and an injection needle-like dispenser 3 is placed at one corner of the substrate 6, next to one end of the doctor 13.

Also, as seen from Fig.21, a prismatic doctor 13 is put on one lateral side of the substrate 6, and an injection needle-like dispenser 3 is placed on one corner of the substrate 6, next to one end of the doctor 13.

The doctor 13 is connected to a Y-direction motion drive (not shown) to slide or rotate in the ink-smearing direction.

The dispenser 3 is connected to an X-direction motion drive (not shown) to be horizontally moved in a direction perpendicular to the ink-smearing direction.

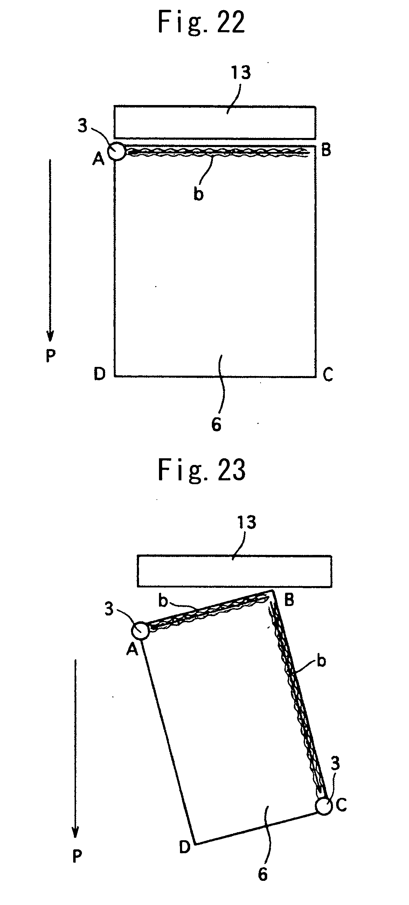

The polarizing film producing apparatus according to the fifth invention is constructed as described as above and works in a following way: assuming that the ink-smearing direction P is parallel to either longitudinal side AD or BC of the substrate 6 in Fig.22, the dispenser 3 is moved from one corner B to the other corner A, allowing the ink liquid "b" to drop along the lateral side BA to provide a strip-like ink puddle just ahead of the doctor 13.

Then, the doctor 13 is moved on the substrate 6 in the ink-smearing direction P to spread the ink puddle made along the lateral side BA to form a film of the ink liquid 6 on the surface of the substrate 6.

The ink liquid between the doctor 13 and the substrate 6 is subjected to shearing force so that the supramolecular complex contained in the ink liquid "b" may align on the substrate 6 in the ink-smearing direction P As a result, the film of the ink liquid "b" on the substrate 6 is provided with the polarizing capability.

As for the cylindrical doctor 13, it can slide with or without rotation.

When the opposite longitudinal sides AD and BC of the substrate 6 are oblique relative to the ink-smearing direction P as shown in Fig.23, two dispensers 3 are used. As the doctor 13 moves forward in the ink-smearing direction P, one dispenser 3 is moved from one corner B to the other corner A, and the ink-liquid "b" drops along the side BA At the same time, the other dispenser 3 is moved from the corner B to the other corner C, and the ink-liquid "b" drops along the side BC.

Then, the doctor 3 moves forward in the ink-smearing direction P to spread both ink puddles over the substrate 6 while applying shearing force to the ink liquid "b" so as to form a film of the ink liquid "b".

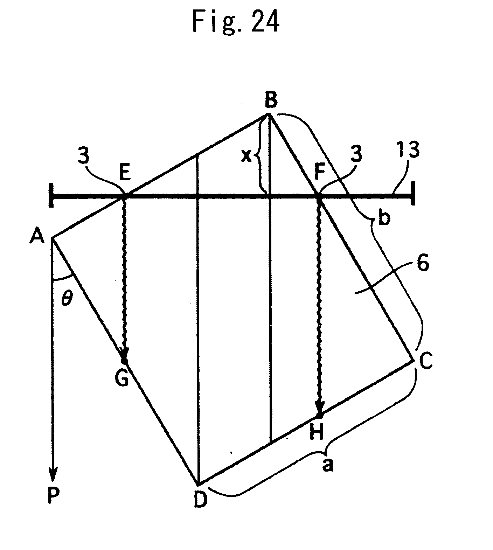

Referring to Fig.24, two dispensers 3 are located at two instantaneous intersections E and F at which a advancing doctor 13 crosses the sides BA and BC for applying ink liquid to the substrate 6. Each dispenser 3 feeds the ink liquid in a program controlled amount, which is in proportion with instantaneous distance EG or FH. These distances extend from the intersections E and F to the counter intersections G and H, at which vertical lines extending from the intersections E and F in the ink-smearing direction P crosses the sides AD and CD of the substrate 6.

When the dispensers 3 reach the corners A and C, the feeding amount of the ink liquid is reduced to zero, thus avoiding the overflowing of the ink liquid at the corners A and C of the substrate 6.

The distances EG and FH can be determined from the equations as described below, where the distances BA and BC are respectively indicated by "a" and "b", a displacement magnitude of the doctor 13 in the ink-smearing direction P is indicated by "X", and an angle between the ink-smearing direction P and the sides AD, BC is indicated by $\theta$:

If $\tan\theta > a/b$ (the diagonal line BD tilted rightward relative to the center);

$$EG = a/\sin\theta - X/\sin^2\theta \ (0 \leq X \leq a \sin\theta)$$

$$FH = a/\sin\theta \ (0 \leq X \leq b \cos\theta - a \cos^2\theta/\sin\theta)$$
$$= b/\cos\theta - X/\cos^2\theta \ (b \cos\theta - a \cos^2\theta/\sin\theta < X \leq b \cos\theta)$$

If $\tan\theta = a/b$ (the diagonal line BD aligned with the center);

$$EG = a/\sin\theta - X/\sin^2\theta \ (0 \le X \le a\,\sin\theta)$$

$$FH = b/\cos\theta - X/\cos^2\theta \ (0 \le X \le b\,\cos\theta)$$

If $\tan\theta < a/b$ (the diagonal line BD tilted leftward relative the center);

$$EG = b/\cos\theta \ (0 \le X \le a\,\sin\theta - b\,\sin^2\theta/\cos\theta)$$
$$= a/\sin\theta - X/\sin^2\theta \ (a\,\sin\theta - b\,\sin^2\theta/\cos\theta < X \le a\,\sin\theta)$$

$$FH = b/\cos\theta - X/\cos^2\theta \ (0 \le X \le b\,\cos\theta).$$

Industrial Applicability:

As regards the polarizing film producing apparatus according to the first invention, the printing cylinder is rotated to transfer the ink liquid film from the format to the substrate. The smooth rotation of the printing cylinder is achieved by friction between the format and the underlying substrate, thereby minimizing the uneven printing.

The rotation of the printing cylinder on the substrate advantageously absorbs the surface irregularity of the substrate such as a slight bow or waviness and keep the format pressure constant, thereby substantially reducing the uneven printing in thickness.

The complicated mechanisms such as the rack-and-gear control for synchronizing the rotation of the printing cylinder with the movement of the table, and the adjustments of such complicated mechanisms are not required, and accordingly the whole apparatus can be simple in structure.

The printing cylinder is detachably supported by the opposite bearings with its axles accommodated in their vertical slots. The printing cylinder can thus be easily removed and mounted, allowing it be changed for a new one after every single usage. The used printing cylinder can also be washed and dried for reuse while being dismounted from the apparatus.

The printing cylinder has weights attached to the opposite sides of its axle to control the pressure to push the format against the substrate. The pressure, therefore, can be easily controlled by changing weights to control the film thickness.

As regards the polarizing film producing apparatus according to the second invention, the movable bearings are horizontally moved , allowing the roller to rotate. The complicated mechanisms such as the rack-and-gear control for synchronizing the rotation of the printing cylinder with the movement of the table, and the adjustments of such complicated mechanisms are not required, and accordingly the whole apparatus can be simple in structure.

The roller is detachably supported by the opposite bearings with its axles accommodated in their vertical slots. The roller can thus be easily removed and mounted, allowing it be changed for a new one after every single use. The used roller can also be washed and dried for reuse while being dismounted from the apparatus.

This permits a production line of the apparatus to be simplified, its tact time to be reduced, and its operation to be facilitated.

The roller has weights attached to the opposite sides of its axle to control the pressure to push the format against the substrate. Shearing force appearing in the gap between the fine grooves of the roller and the substrate can be controlled simply by changing weights, and therefore a polarizing film with a desired polarizing capability can be easily produced.

Spacers are also used between the roller and the substrate to control the ink film in thickness. Advantageously, a polarizing film of desired thickness can be easily provided by selecting spacers of appropriate thickness.

As regards the polarizing film producing apparatus according to the third invention, the doctor is put on the substrate with spacers inserted between the doctor and the substrate, and then the doctor is moved forward, making the ink liquid containing the supramolecular complex spread in the ink smearing direction to form a polarizing film on the substrate. The complicated mechanisms such as the rack-and-gear control for synchronizing the rotation of the printing cylinder with the movement of the table, and the adjustments of such complicated mechanisms are not required. Also advantageously, the washing-and-drying apparatus and the dispenser can be simplified.

The thickness of the ink liquid film varies with the thickness of the spacer, and therefore, the polarizing film can be easily adjusted in thickness simply by selectively using spacers of different thickness.

As regards the polarizing film producing apparatus according to the fourth invention, the format has a flat printing surface without any levels, thereby allowing the format to closely contact the substrate with the ink liquid confined inside of the printing section, preventing the leak of the ink liquid toward either non-printing section so that little or no ink puddle can be formed on either side.

Any impediment that could be caused in the following steps of production by such ink puddles can thus be avoided

As regards the polarizing film producing apparatus according to the fifth invention, the injection needle-like dispenser is moved to drop the ink liquid to draw a linear line, making it possible to control the feeding amount of the ink liquid in the instantaneous lateral direction. Such control of the feeding amount of the ink liquid cannot be achieved with the slit-like dispenser. The lateral ink feeding-and-longitudinal ink spreading permits the printing of the substrate on the table rotated at a given oblique angle, not allowing the ink liquid to flow over the substrate.

The apparatus advantageously uses an ink-feeding pump which is simpler than that associated with the slit-like dispenser, facilitating its cleansing as well.

## Claims

1. A polarizing film producing apparatus in which a dichromatic dye ink liquid is applied to a format fixed to a printing cylinder to form an ink film on the format, and the so formed ink film is transferred from the format to a substrate to produce a polarizing film, **characterized in that**: the opposite ends of an axle of said printing cylinder are freely supported in a pair of horizontally movable bearings; said printing cylinder is laid on the substrate; and said bearings are then horizontally moved in a printing direction; thereby allowing said printing cylinder to rotate on the substrate while transferring the ink film to the substrate.

2. A polarizing film producing apparatus according to claim 1, wherein each of the said bearings has a vertical open-slot to accommodate either end of the axle of said printing cylinder.

3. A polarizing film producing apparatus according to claim 1, wherein said axle of the printing cylinder has weights fixed to its opposite ends to adjust pressure from the format.

4. A polarizing film producing apparatus in which a polarizing film is produced by applying onto the surface of the substrate an ink liquid containing supramolecular complex in liquid crystalline state of dichromatic dye automatically accumulated in a stick-like form, **characterized in that**: a roller having a plurality of fine grooves formed on its circumference is freely supported by a pair of movable bearings and is kept in contact with the substrate; and the movable bearings are horizontally moved along the substrate; thereby allowing the roller to rotate and spread said ink liquid over the substrate.

5. A polarizing film producing apparatus according to claim 4, wherein each of the said bearings has a vertical open-slot to accommodate either end of the axle.

6. A polarizing film producing apparatus according to claim 4, wherein the axle of said roller has weights fixed to its opposite ends to adjust the pressure from the format.

7. A polarizing film producing apparatus according to claim 4, wherein it further includes spacers to define a gap between said roller and said substrate.

8. A polarizing film producing apparatus using an aqueous solution containing automatically accumulated stick-like supramolecular complex in lyotropic liquid crystalline state as an ink liquid, **characterized in that** it includes spacers placed between a doctor and a substrate while applying the ink liquid over the substrate.

9. A polarizing film producing apparatus according to claim 8, wherein said doctor is a rotating object.

10. A polarizing film producing apparatus according to claim 8, wherein said doctor is a non-rotating object.

11. A polarizing film producing apparatus according to claim 8, wherein said doctor is a cylinder.

12. A polarizing film producing apparatus according to claim 8, wherein said doctor is a prism.

13. A polarizing film producing apparatus according to claim 8, wherein said spacers are metal foil strips.

**14.** A polarizing film producing apparatus according to claim 8, wherein said spacers are metal wires.

**15.** A polarizing film producing apparatus in which a polarizing film is produced on the surface of a substrate using a printing format member put on the substrate to apply an ink liquid containing supramolecular complex in liquid crystalline state of dichromatic dye automatically accumulated in a stick-like form, **characterized in that** said printing format member has a printing surface leveled off throughout a whole contacting area with the substrate.

**16.** A polarizing film producing apparatus according to claim 15, wherein said printing format member has an intervening printing section at its center and two non-printing sections at its opposite ends, the center printing section having numerous fine grooves formed in the printing direction.

**17.** A polarizing film producing apparatus according to claim 15, wherein said printing format member has numerous fine grooves formed all over the surface in the printing direction.

**18.** A polarizing film producing apparatus according to claim 15, wherein said printing format member is the one for use in the flexographic printing

**19.** A polarizing film producing apparatus according to claim 15, wherein said printing format is a roller made of a flexible material such as rubber or synthetic resin.

**20.** A polarizing film producing apparatus in which a polarizing film is produced on the surface of a substrate using a doctor to apply an ink liquid containing supramolecular complex in liquid crystalline state of dichromatic dye automatically accumulated in a stick-like form, **characterized in that**: an injection needle-like dispenser is placed at a selected end on the substrate; the injection needle-like dispense is moved perpendicular to ink-smearing direction to drop the ink liquid forming a linear puddle; and then a doctor is moved in the ink-smearing direction to make the linear puddle of the ink liquid spread in two-dimensional way.

**21.** A polarizing film producing apparatus according to claim 20, wherein it includes two dispensers for spreading an ink liquid on a substrate oriented in a different direction from an ink-smearing direction, the two dispensers being movable independently from each other to feed the ink liquid in programmed quantities on the substrate along its orthogonal adjacent sides firstly encountered by a doctor.

**22.** A polarizing film producing apparatus according to claim 21, wherein said programmed ink feeding quantities are determined to be proportional to straight distance parallel to the ink-smearing direction extending from said first orthogonal adjacent sides to the counter two adjacent sides of the substrate.

Fig. 1

# Fig. 2

# Fig. 3

(a)

(b)

(c)

# Fig. 4

Fig. 5

## Fig. 6

Fig. 7

Fig. 8

Fig. 9

Fig. 10

Fig. 11

Fig. 12

# Fig. 13

(a)

5

6

A

(b)

5

6

A

(c)

5

6

A

Fig. 14

Fig. 15

Fig. 16

Fig. 17

Fig. 18

Fig. 19

## Fig. 20

## Fig. 21

# Fig. 22

# Fig. 23

Fig. 24

Fig. 25

Fig. 26

Fig. 27

Fig. 28

Fig. 29

Fig. 30

**INTERNATIONAL SEARCH REPORT**

| International application No. |
|---|
| PCT/JP2004/002460 |

A. CLASSIFICATION OF SUBJECT MATTER
Int.Cl$^7$ G02B5/30, G02F1/1335, B41F17/14, B41F3/20

According to International Patent Classification (IPC) or to both national classification and IPC

B. FIELDS SEARCHED

Minimum documentation searched (classification system followed by classification symbols)
Int.Cl$^7$ G02B5/30, B05C5/00-21/00, B05D1/00-7/26, B41F3/20, B41N1/00-11/00

Documentation searched other than minimum documentation to the extent that such documents are included in the fields searched
Jitsuyo Shinan Koho        1922-1996   Jitsuyo Shinan Toroku Koho   1996-2004
Kokai Jitsuyo Shinan Koho  1971-2004   Toroku Jitsuyo Shinan Koho   1994-2004

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 8-511109 A (Russian Technology Group.), 19 November, 1996 (19.11.96), Claims; page 16, line 16 to page 17, line 11; Fig. 3 & WO 94/28073 A1        & US 5739296 A & EP 700420 A1 | 8-14 |
| Y A | JP 11-188835 A (Canon Inc.), 13 July, 1999 (13.07.99), Par. No. [0040]; Fig. 1 (Family: none) | 1-2 3,15-19 |
| Y A | JP 57-168204 A (Dainippon Printing Co., Ltd.), 16 October, 1982 (16.10.82), Full text; all drawings (Family: none) | 1-2 3 |

☒  Further documents are listed in the continuation of Box C.        ☐  See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 13 May, 2004 (13.05.04) | 01 June, 2004 (01.06.04) |

| Name and mailing address of the ISA/ | Authorized officer |
|---|---|
| Japanese Patent Office | |
| Facsimile No. | Telephone No. |

Form PCT/ISA/210 (second sheet) (January 2004)

**EP 1 602 948 A1**

**INTERNATIONAL SEARCH REPORT**

| International application No. |
|---|
| PCT/JP2004/002460 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 63-171666 A (Dainippon Printing Co., Ltd.), 15 July, 1988 (15.07.88), Full text; all drawings (Family: none) | 4-7 |
| A | JP 2002-66416 A (Central Glass Co., Ltd.), 05 March, 2002 (05.03.02), Full text; all drawings (Family: none) | 20-22 |

Form PCT/ISA/210 (continuation of second sheet) (January 2004)

31

**EP 1 602 948 A1**

<table>
<tr><td><b>INTERNATIONAL SEARCH REPORT</b></td><td>International application No.<br>PCT/JP2004/002460</td></tr>
</table>

**Box No. II      Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III      Observations where unity of invention is lacking (Continuation of item 3 of first sheet)**

This International Searching Authority found multiple inventions in this international application, as follows:
```
    As a concrete means for producing a polarizing film, Claim 1 "applies an
ink liquid to a plate fixed to a printing cylinder to form a thin film and
transfer-applies this thin film from the plate to a substrate", whereas Claims
4, 8, 15, and 20 "spread the ink liquid over the surface of the substrate
to thereby apply it to the surface of the substrate." These inventions are
not in technical relation including one or two or more identical or corresponding
special technical features; therefore, it is not deemed that they are so linked
as to form a single general inventive concept.
(See extra sheet.)
```

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**      ☐ The additional search fees were accompanied by the applicant's protest.

☒ No protest accompanied the payment of additional search fees.

Form PCT/ISA/210 (continuation of first sheet (2)) (January 2004)

**INTERNATIONAL SEARCH REPORT**

International application No.

PCT/JP2004/002460

Continuation of Box No.III of continuation of first sheet(2)

Further, the matter common to Claims 4, 8, 15, and 20 is that "an ink liquid is spread-applied to the surface of the substrate to form a polarizing film on the surface of the substrate."

However, the search result shows that this common matter is disclosed in a document WO 94/28073 A1, 08 December, 1994, page 17, lines 13 to 24, and Figs. 3a, 3b; thus, it has become clear that it is not novel.

As a result, since the fact that "an ink liquid is spread-applied to the surface of the substrate to form a polarizing film on the surface of the substrate" is no better than prior art, this common matter is not a special technical feature in the sense of the second sentence of PCT Rule 13.2.

Therefore, there is no matter common to Claims 4, 8, 15, and 20.

Since there is no other common matter which is considered to be a special technical feature in the sense of the second sentence of PCT Rule 13.2, a technical relation in the sense of PCT Rule 13 cannot found among these differing inventions.

Thus, Claims 4, 8, 15, and 20 do not comply with the requirement of unity of invention.

Form PCT/ISA/210 (extra sheet) (January 2004)